# EUROPEAN PATENT SPECIFICATION

(11) **EP 1 097 336 B1**
(45) Date of publication and mention of the grant of the patent: **17.09.2003**
(21) Application number: 99934753.7
(22) Date of filing: 12.07.1999
(51) Int. Cl.: F16L 59/02

(54) **APPARATUS FOR THE MANUFACTURE OF INSULATING CHUTES FROM MINERAL WOOL MAT**
VORRICHTUNG ZUR HERSTELLUNG VON BAHNEN AUS ISOLIERMATERIAL AUS MINERALWOLLMATTEN
APPAREIL PERMETTANT DE FABRIQUER DES SECTIONS D'ISOLATION A PARTIR D'UNE BANDE DE LAINE ISOLANTE

(30) Priority: 10.07.1998 FI 981587
(43) Date of publication of application: 09.05.2001
(73) Proprietor: Paroc Group Oy Ab, 01300 Vantaa (FI)
(72) Inventor: SOIKKELI, Osmo, FIN-53650 Lappeenranta (FI)
(74) Representative: Haimelin, Jukka Ilmari
(86) International application number: FI9900609
(87) International publication number: WO00003173

(56) References cited:
- WO-A1-89/12776
- SE-B- 371 877
- SE-C- 214 878
- US-A- 3 344 009
- US-A- 5 091 037

## Description

The present invention relates to an apparatus for manufacturing preformed insulation sections from a mineral wool web. The insulation sections are made to a given length and to a given inner diameter, thus being primarily suited for installation as insulation on piping of a given dimension. Such insulation sections are conventionally made from a mineral wool web by winding the mineral wool around a mandrel and then curing the binding agent impregnated into the mineral wool web as the insulation section blank is still resting wound around the mandrel. Next, the insulation section is covered by a suitable sheath material to give the section a moisture barrier and/or mechanical protection, whereafter the insulation section is removed from the mandrel and cut to length. The sections are further split in a conventional way by a longitudinal slit to enable their mounting at the installation site on the piping to be insulated.

Continuously operating apparatuses have been developed for the above-described process, one of which is described in Int. Pat. Appl. No. WO 89/07733. This apparatus embodiment has a loop track acting as collective conveyor means transporting the mandrels via different sections of the apparatus, which sections are: a winding device, a curing device, a coating device, a mandrel removal device, a cutting device and a slitter device. In said apparatus the winding of the insulation section is carried out by means of a winding belt moving along an endless loop track, which winding belt can be compressed to enclose essentially the entire mandrel brought to the winding station. The mandrel is mounted so as to be freely rotating in the winding station and it is driven by means of the winding belt pressing against the mandrel surface with a given force. The mineral wool is passed as a web essentially as wide as the length of the mandrel into a nip formed by the winding belt and the mandrel, and further around the mandrel onto which it is wound under the compression of the winding belt. The wall thickness of an insulation section is determined by the amount of mineral wool passed to each winding step.

The curing device of the apparatus is operating batchwise,and it accepts a given amount of mandrels at a time. This must be taken into account in the dimensioning and operation of the other sections of the apparatus. Above all the mandrels travel on the conveyor track in groups comprising the amount accepted by the curing device, whereby a sufficient buffer space must be arranged to cope with the operating cycle of the curing device. A further factor slowing down the operation of this known apparatus is the changing of mandrel size during a product changeover. These insulation sections are manufactured in a plurality of diametral sizes to comply with each site to be insulated, and the change of size in the production has to be carried out quite frequently according to customers demand in order to avoid unnecessarily large inventories.

Changing mandrel size in known apparatuses causes a production shutdown for the duration of the changing operation.

It is an object of the present invention to overcome the difficulties slowing down the production rate of the above-described types of known apparatuses by virtue of equipment constructions disclosed in the appended claim 1.

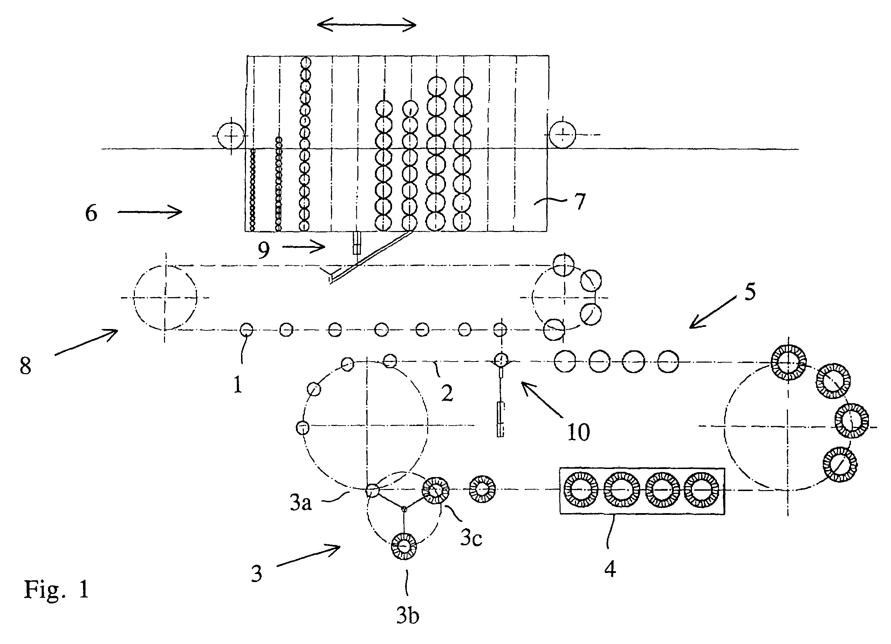

In the following, the invention will be disclosed in greater detail with reference to the appended drawing in which
Figure 1 shows schematically the overall structure of the apparatus.

Referring to Fig. 1, the apparatus shown therein is equipped in a conventional manner with a conveyor track 2 transporting mandrels 1 along a loop track in a transverse position and spaced at a distance from each other. A first section disposed along said track is a winding device 3. The winding device is provided with three stations: a receiving station 3a, a winding station 3b proper and a delivery station 3c. During the operation of the apparatus, there may simultaneously be a mandrel in each of these stations. By this arrangement the operation of the station can be hurreid up firstly through eliminating the need for moving the mandrels along reciprocating paths. Secondly, the apparatus enables an operation, according to which the conveyor track 2 can move forward by one mandrel spacing during the winding of a mandrel. The apparatus enables a mandrel to be returned one step forward on the transport track in regard to its original picking point.

The apparatus comprises a mandrel change device 6. An essential part of this mandrel change device is a mandrel storage 7 comprising a plurality of upright mandrel compartments, each aimed at a given size of mandrel. The compartments can be filled from below and, respectively, the mandrels can be slipped out from the compartments from below. According to the invention a conveyor 8 is positioned into the mandrel change device, which conveyor in the described embodiment is an endless-loop conveyor. Along the track of this conveyor, there are disposed two operational units: firstly a mandrel delivery/removal station 9 and secondly a mandrel change station 10. The mandrel delivery/removal station is placed between the mandrel storage 7 and the conveyor 8, while the mandrel change station 10 is placed between the conveyors 8 and 2.

The mandrel storage 7 is movable in a horizontal plane so that a desired mandrel compartment can be transferred to a position above the mandrel delivery/removal station 9. Mandrels to be changed are elevated one by one into their own compartment and in their place a mandrel to be used is slipped from another compartment. A sufficiently long construction of the intermediate conveyor 8 also enables an operation, in which a set of mandrels to be changed can be removed as an unitary operation to their own compartment, and correspondingly the new mandrels can be slipped as an unitary operation onto the conveyor 8.

Between the conveyor 8 of the mandrel change device and the conveyor 2 of the insulation section manufacturing apparatus proper, a mandrel change station 10 is operating. In this station, a mandrel to be changed is removed from the track of the endless-loop conveyor 2 and a new mandrel is taken from the conveyor 8.

This arrangement enables change of mandrel size during the normal operation of the apparatus without any shutdowns or delays.

## Claims

1. Apparatus for manufacturing insulation sections from mineral wool by winding a mineral wool web around mandrels of desired size, said apparatus including a conveyor equipment, such as an endless-loop conveyor track (2) for transporting mandrels (1) and, disposed along this track so as to be passed through by the mandrels, a winding device (3), a curing device (4) for wound sections, a mandrel removal device (5) and a mandrel change device (6), said mandrel change device (6) comprising a mandrel storage (7) with compartments for each mandrel size to be filled/discharged from below, **characterized in that** between said mandrel storage (7) and said endless-loop conveyor track (2) there is adapted an intermediate conveyor (8) and that upon this a mandrel delivery/removal station (9) and a mandrel change station (10) are adapted so that said mandrel delivery/removal station is arranged to operate between said mandrel storage (7) and said intermediate conveyor (8) and said mandrel change station (10) is arranged to operate between said intermediate conveyor (8) and said conveyor track (2).

2. Apparatus according to claim 1, **characterized in that** said intermediate conveyor (8) is realized as an endless-loop conveyor equipped with storage facilities for the mandrel sets required in the manufacture of two different sizes of insulation sections.

## Patentansprüche

1. Vorrichtung zum Herstellen von Isolierrohren aus Mineralwolle durch Aufwickeln einer Mineralwollbahn um Wickeldorne gewünschter Größe, bestehend aus einer Fördereinrichtung, wie einer umlaufenden endlosen Förderbahn (2), zum Befördern der Wickeldorne (1), sowie, längs dieser Bahn zum Durchlaufen von den Wickeldornen angeordnet, einer Wickelvorrichtung (3), einer Härteeinrichtung (4) der Rohre, einer Vorrichtung zur Entfernung der Wickeldorne (5) und einer Vorrichtung (6) zum Wechseln der Wickeldorne, die ein Wickeldornlager (7) mit von unten beschickbaren/entleerbaren Fächern für jede Kerngrösse umfasst, **dadurch gekennzeichnet, dass** zwischen dem Wickeldornlager (7) und der endlosen Förderbahn (2) ein Zwischenförderer (8) angeordnet ist, und dass an dessen Bahn eine Wickeldornabgabe/Entfernungsstation (9) und eine Station (10) zum Wechseln der Wickeldorne derart angeordnet sind, dass die Wickeldornabgabe/Entfernungsstation zwischen dem Wickeldornlager (7) und dem Zwischenförderer (8) arbeitet, und die Station (10) zum Wechseln der Wickeldorne derart angeordnet ist, dass diese zwischen dem Zwischenförderer (8) und der Transportbahn (2) arbeitet.

2. Vorrichtung gemäß Anspruch 1, **dadurch gekennzeichnet, dass** der Zwischenförderer (8) als eine umlaufende endlose Förderbahn ausgeführt ist, die mit Lagerungsvorrichtungen für die bei der Herstellung von Isolierrohren zweier verschiedener Größen erforderlichen Wickeldornsatze versehen ist.

## Revendications

1. Appareil permettant de fabriquer des sections d'isolation à partir de laine minérale en enroulant une bande de laine minérale autour de mandrins de taille souhaitée, ledit appareil comprenant une installation de convoyage, telle qu'un chemin de convoyage sans fin (2) pour transporter les mandrins (1) et, agencés le long de ce chemin de façon à être véhiculés par les mandrins, un dispositif d'enroulement (3), un dispositif de traitement thermique (4) pour les sections enroulées, un dispositif de retrait de mandrin (5) et un dispositif de changement de mandrin (6), ledit dispositif de changement de mandrin (6) comprenant un stockage de mandrin (7) avec des compartiments pour chaque taille de mandrin se remplissant/vidant par le bas, **caractérisé en ce qu'**entre ledit stockage de mandrin (7) et ledit chemin de convoyage sans fin (2) il est adapté un convoyeur intermédiaire (8) et **en ce qu'**au-dessus de celui-ci, une station de livraison/retrait de mandrin (9) et une station de changement de mandrin (10) sont adaptées de sorte que ladite station de livraison/retrait de mandrin est agencée pour fonctionner entre ledit stockage de mandrin (7) et ledit convoyeur intermédiaire (8) et ladite station de changement de mandrin (10) est agencée pour fonctionner entre ledit convoyeur intermédiaire (8) et ledit chemin de convoyage (2).

2. Appareil selon la revendication 1, **caractérisé en ce que** ledit convoyeur intermédiaire (8) est réalisé sous forme de convoyeur sans fin équipé d'installations de stockage pour les ensembles de mandrin requis pour la fabrication de deux tailles différentes de sections d'isolation.
